# EUROPEAN PATENT APPLICATION

(11) **EP 1 779 804 A2**
(43) Date of publication of application: **02.05.2007**
(21) Application number: 06022451.6
(22) Date of filing: 27.10.2006
(51) Int. Cl.: A61C 5/02

(54) **Endodontic device and method of manufacturing same**

(30) Priority: 01.11.2005 IL 17170505
(71) Applicant: Medic.Nrg Ltd., Kibbutz Afikim 15148 (IL)
(72) Inventor: Levy, Haim, Pardes Hanna (IL); Becker, Arie, Kibbutz Afikim 15148 (IL); Rotenshtein, Simon, Rosh HaAyin (IL)
(74) Representative: Schmid, Wolfgang

(57) **Abstract**

There is provided an endodontic device for cleaning, filing or reaming root canals, including a metallic, flexible strand having an edge, an effective section and a connecting section and a coupling head connected thereto. The strand is coated along its effective section with a thin layer of a binder having abrasive particles embedded therein. A method for cleaning, filing, or reaming root canals and for manufacturing an endodontic device, is also provided.

## Description

### Field of the Invention

The present invention is in the field of endodontistry and more particularly, the present invention concerns an endodontic device and a method for endodontic treatment. More specifically, the present invention relates to an endodontic device for cleaning, filing and reaming root canals and to a method for using and manufacturing same.

### Background of the Invention

Modem endodontic treatment involves removal of the damaged pulp, followed by cleaning and shaping of the root canal space, irrigating, and filling with biocompatible material such as gutta-percha and a root canal sealer.

Shaping of the canal is performed either manually, using hand-held stainless steel endodontic, substantially rapid files, or mechanically, using rotary nickel-titanium files adapted to fit a standard or dedicated dental handpiece.

The manual process relies on the experience of the dentist, is physically difficult to perform and is time consuming. The use of files requires repeated changing between, numerous different files, conical in shape, progressively increasing from the smallest to the largest. Hand-held steel files are limited in angle of rotation to about thirty degrees back and forth and may not reach the apical portion of the root canal if the canal is curved or meandered. The reason for such limitations relates to the moderate elasticity of the steel files and the risk of fracture when excessive force is applied. The round cross-section of the file eliminates adequate cleaning when the canal cross-section is oval or narrow in shape. In such cases enlargement of the canal cross-section to accept the round cross-section of the file, may weaken or perforate the wall or the apical portion of the canal.

Although the field of elastic rotary nickel-titanium endodontic files has developed greatly over the last few years, fracture of nickel-titanium rotary files is still often reported, and hence the use of such, is restricted. In order to overcome the fracture problem, a large range of dedicated handpiece systems, powered by slow speed electric motors equipped with torque limitation circuits, were developed. As a result the cost of files and the related equipment per endodontic treatment became significantly high.

In order to overcome the problem of breakage of files in the root canal during endodontic treatment and the potential risk of having to leave a broken file tip in the root canal, it was suggested in U.S. Patent 6,443,730 to use a break-resistant, multifilament composite for producing an endodontic reamer, comprising a plurality of twisted fibers "that are molded with a polymer matrix to form a pre-twisted core 12" (col. 3, lines 65-66). In the polymer matrix there can be embedded abrasive particle material.

Another drawback of the prior art nickel-titanium and composite files is related to the flexibility of these files, which are more likely to follow root canal curvature and to remain in the center of the root canal, as stated in the U.S. Patent No. 6,746,245. By remaining in the center, the file instrument works contemporaneously and indiscriminately on all walls within reach of the file. Since root canal walls do not have equal thicknesses in all directions and at all different points along a root canal, some walls can be overthinned or perforated. Additionally, nickel-titanium thin file instruments can be too flexible to adequately clean the root canal as the file may bend and be deformed when it encounters a hard substance. Since the nickel-titanium files are flexible, they tend to follow the path of least resistance and cannot be used to aggressively clean the portions that need to be cleaned and are difficult to reach. Accordingly, when a nickel-titanium file is used to clean a non-cylindrically shaped root canal, the file moves only at the center of the canal and/or the area of least resistance and fails to remove all of the necrotic tissue.

During cleaning and shaping, the canal is commonly irrigated with a solution of sodium hypochloride (bleach). It is able to lubricate, wash out debris, dissolve organic tissue and destroy microorganisms present in the root canal. The bleach should be irrigated from the canal with a final saline irrigation. Most irrigation techniques involve the use of a flexible syringe, so that during the repeated wash cycle, the handpiece holding the file is put to rest in its seat. Some other solutions, such as those suggested in U.S. Patent No. 6,464,498, include the use of a specific handpiece equipped with pressure inlet and suction outlet coupled to a surgical needle. All such procedures, however, require a long cessation in the canal shaping operation while switching between different tools.

Consequently, there exists a need for an efficient root canal treatment with minimal tool changing and removal of healthy dentine layer while shaping the root canal.

### Summary of the Invention

It is therefore a broad object of the present invention to provide an endodontic device and method utilizing a flexible, break resistant endodontic device for cleaning, filing and reaming of a tooth root canal, for performing an endodontic treatment.

It is a further object of the present invention to provide a method of manufacturing a flexible break-resistant endodontic device for cleaning, filing and reaming of a tooth root canal.

Yet another object of the present invention is to provide a complement irrigation system to be used in conjunction with the endodontic device according to the present invention, during endodontic treatment.

In accordance with the present invention there is provided an endodontic device for cleaning, filing or reaming root canals, comprising at least one metallic, flexible strand having an edge, an effective section and a connecting section and a coupling head connected thereto, said strand being coated along its effective section with a thin layer of a binder having abrasive particles embedded therein.

The invention further provides a method for cleaning, filing or reaming root canals, comprising providing an endodontic device, as claimed in claim 1, inserting said effective section into the root canal, rotating said device at a selected speed, advantageously using the radial centrifugal forces acting on the thin flexible effective section of the device, to follow the natural curvature and complex cross-section of the root canal.

The invention still further provides a method for manufacturing an endodontic device, comprising providing at least one metallic, flexible strand, covering intermittent portions of said strand with a binder blocking layer, coating exposed sections of said strand with a layer of a binder having abrasive particles embedded therein to form an effective section, dissolving the blocking layer, molding a coupling head and coupling member onto said dissolved portions while leaving non-coated portions between said effective section and said coupling head, and cutting said strand between the effective sections and said coupling head.

### Brief Description of the Drawings

The invention will now be described in connection with certain preferred embodiments with reference to the following illustrative figures, so that it may be more fully understood.

With specific reference now to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
Fig. 1 is a cross-sectional, exploded view of the endodontic device, according to the present invention;
Fig. 2 is a cross-sectional assembled view of the endodontic device of Fig. 1;
Fig. 3 is a perspective view of the assembled endodontic device of Fig. 2;
Fig. 4 is a cross-sectional view of another embodiment of the device according to the present invention;
Fig. 5 is a side view of an endodontic device according to the present invention, fitted with a spring absorber;
Fig. 6 is a side view of a further embodiment of the device according to the present invention;
Fig. 7 is a side view of a modification of the device of Fig. 6;
Fig. 8 is a side view of still a further embodiment of the device of the present invention;
Fig. 9A is a side view of a variant of Fig. 8;
Fig. 9B is an enlarged view of an encircled detail of Fig. 9A;
Fig. 10 is a cross-sectional view of the endodontic device according to the present invention, inserted in a root canal;
Fig. 11 is a cross-sectional view of the endodontic device, during use;
Fig. 12 is a cross-sectional view across line A-A of Fig. 10;
Fig. 13 is a cross-sectional view similar to Fig. 11, illustrating the rotation of the device in an opposite sense;
Fig. 14 is a perspective view of the device according to the present invention coupled to a hand piece equipped with an irrigation system;
Fig. 15 is a perspective view of a further embodiment of the system of Fig. 14, and
Fig. 16 is a modification of the system of Fig. 15.

### Detailed Description of the Preferred Embodiment

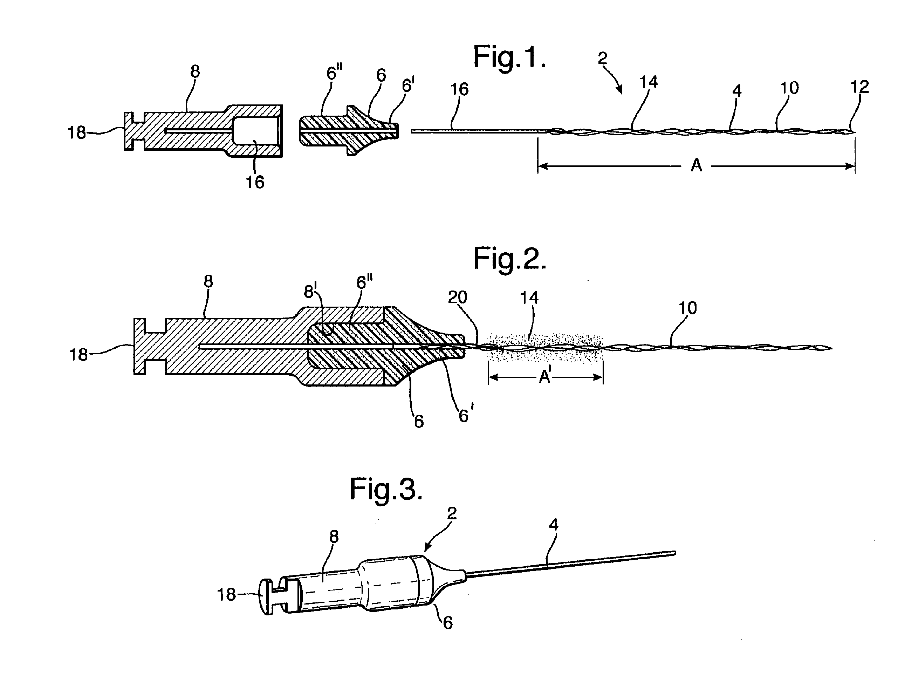

The structure of the endodontic device 2 for cleaning, filing and reaming of a tooth root canal according to the present invention, will now be described in detail with reference to Figs. 1 to 3. The device 2 advantageously includes three connectable portions, the work performing or effective portion 4, coupling member 6 and head 8. The portion 4 is made of a section of one or more strands 10, preferably of metal, e.g., stainless steel, nickel-titanium or beryllium-bronze, with or without springy properties. If more than one strand is used, at least the edges 12 may be twisted, welded, brazed or otherwise connected, to form a connected pointed edge, while the remaining portion of the individual strands may be unconnected, loosely or tightly, twisted or braided. For effective endodontic work in a root canal, i.e., cleaning, filing or polishing, a section A of the strands 10 is coated with an abrasive layer 14. The uncoated connecting section 16 is used for fixing the strands 10 to the head 8. Such an abrasive layer 14 is normally composed of grains of abrasive particles embedded, during an electro-plating process in a thin layer of typically, nickel, serving as a binder. Suitable abrasives can be aluminum oxide, silicon carbide, zirconia or diamond powder, or any other abrasive powder. Grain size larger than the average thickness of the nickel layer is selected, such that the sharp edges of the abrasive grains are exposed from the layer to perform an abrading action. If a multi-strand cable is used, the coating process may be performed on individual strands 10 before twisting to a cable, or on the already twisted cable, coating only the outer surface of section A of the strands. Optionally, as seen in Fig. 2, a sub portion A' of the section A, away from the edge 12, may be coated with coarse grains to form a thicker layer 14 to better fit the root canal shape.

The term "strand" or "strands" will be used herein to designate a single strand or a multiplicity of strands, whether loosely or tightly twisted or wound into a cable.

Coupling member 6 configured as an arrowhead, preferably made of soft material such as rubber or thermoplastic elastomer, has two portions: a first tapered portion 6', fixedly attached to the strands connection section 16, and a second portion 6", configured to fit into a bore 8' made in the head 8. As seen in Fig. 2, the connection section 16 of the strands 10 may extend through and beyond the member 6 and be anchored in the head 8. Obviously, this kind of connection can be achieved by molding of the head 8 and the member 6 onto the strands 10 during manufacture, using plastics and thermoplastic elastomers respectively. The head 8 is configured with a standard coupling end 18 for releasable attachment to an endodontic hand piece. Optionally a metal head 8 may be crimped over the strands 10 or otherwise soldered, brazed or bonded.

In addition to the relatively soft coupling member 6, having a flexible tapered part 6' that can follow the movement of the strands 10 during operation, it was found that even better results can be achieved when a portion 20 (Fig. 2) adjacent to the connection between the strands 10 and the member 6, is optionally left uncoated. This preserves the portion of the strands most liable to break under rigorously rotational and bending actions, with maximal flexibility. In addition, the uncoated bare portion 20 can also serve as an electrical connection location between the metallic strands 10 and an apex locator, as per-se known.

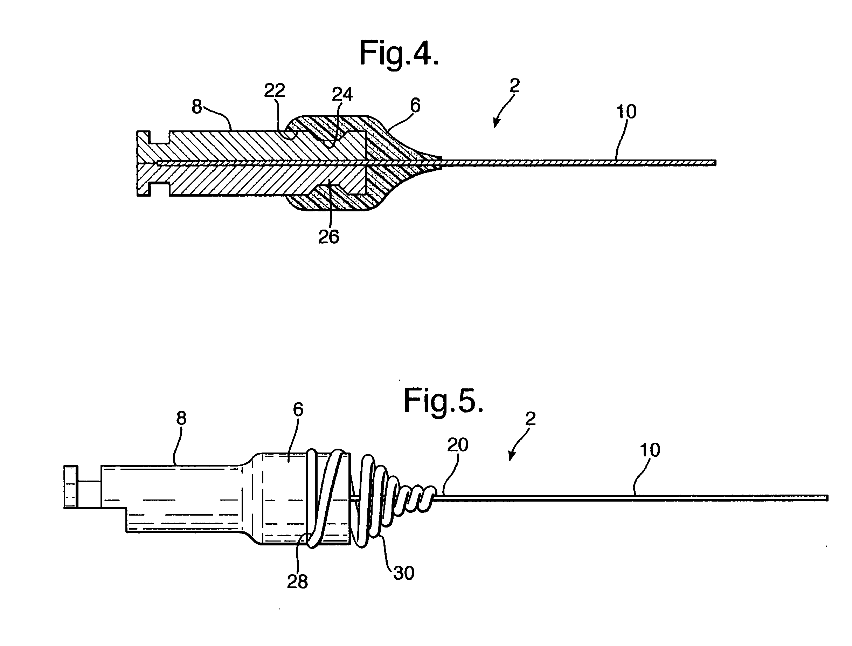

A modification of the structure of the device 2 is illustrated in Fig. 4. Here the coupling member 6 is formed with a bore 22 having an annular projection 24 and the head 8, which advantageously may be made of two parts, as shown, and has an annular groove 26 configured to match the projection 24, when assembled. As can be understood, this kind of a device is most suitable for use with an endodontic hand piece, as well as manually.

Referring to Fig. 5, there is illustrated a different embodiment for flexibly attaching the strands 10 to the head 8. A groove 28 is cut on the outer circumference of the head for accepting a conical spiral spring 30. The small end of the spring 30 grips the connecting section of the strands 10 and has the same effect as the flexible member 6, which is, to absorb vibration and eliminate stress concentration in the root of the strands 10 during operation.

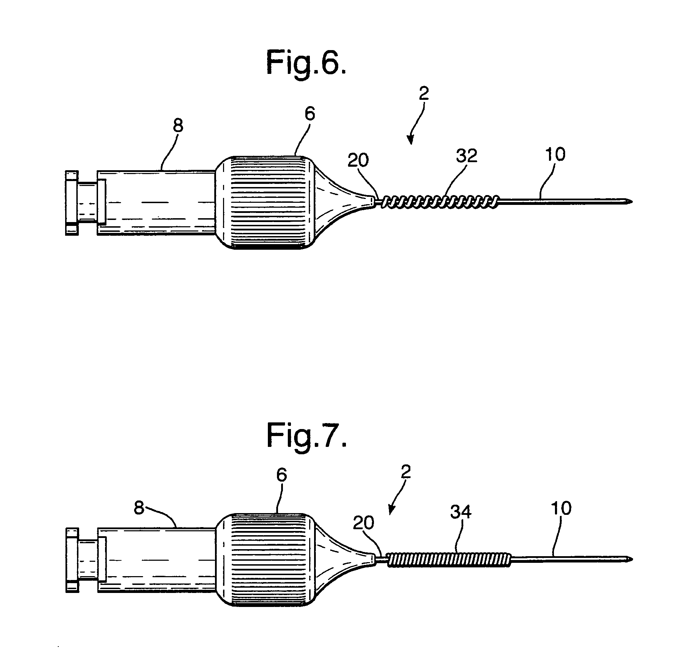

Still further embodiments of the device 2 are shown in Figs. 6 to 10B. Seen in Fig. 6 is the device 2, to the strands 10 of which is attached a loosely wound helical spring 32, which prevents the wrapped portion of the strands 10 from buckling. The spring 32 may itself be coated with an abrasive layer 14, while the portion of the strands 10, wrapped by the spring 32 remains uncoated, preserving greater flexibility. A variant of the embodiment of Fig. 6 is illustrated in Fig. 7 showing a tightly wound spring 34 providing less flexibility. In both embodiments, a portion 20 between the springs 32, 34 and the handle 6 may be left exposed.

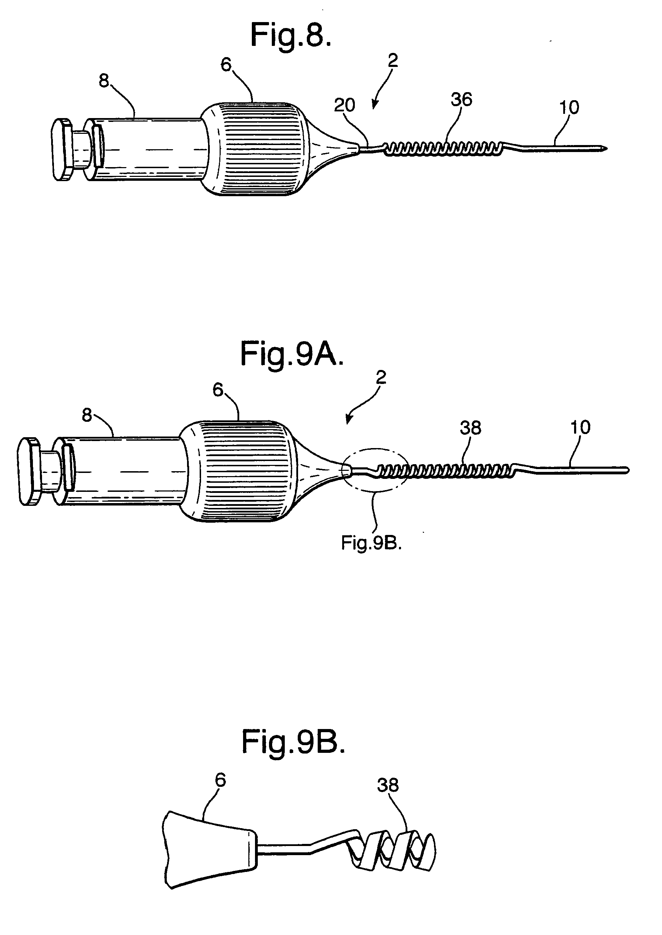

Referring to Fig. 8, here the strands 10 themselves are formed with a spring portion 36, namely, the spring portion 36 is an integral part of the strands 10. The spring portion may be loosely or tightly wound and may be coated with an abrasive layer 14.

While the strands 10 illustrated hereinbefore have been shown as having a circular cross-section, this need not necessarily be the case. For example, in Figs. 9A and 9B there are shown non-circular strands 10 having an integral spring portion 38 of a non-circular, multi-sided cross-section. This type of configuration provides the strands 10 with sharp edges having improved cutting capabilities along the periphery. Also, the non-circular cross-section renders the strands 10 with greater surface areas to which the abrasive coated layer is applied, thus increasing abrasion without substantially increasing the diameter of the strands.

A proposed automatic process for manufacturing the endodontic device 2 will now be described. A long strand or twisted cable, preferably supplied coiled on a reel, is pulled and intermittent portions thereof are dipped or otherwise covered with coat blocking layer. The strand or cable is then continuously passed in an electro plating bath for the process of coating abrasive layer embedded in a thin nickel binder to form effective portions 4. The strand or cable is then dipped in a solvent bath to remove the blocking layer and directed continuously into a plastic injection mold machine for the molding of the coupling head 8 directly on the strand or cable. The coupling member 6 composed of thermoplastic elastomer is preferably over molded as a second step in a multi component molding machine, while optionally leaving non-coated portions 20 between said effective section and said coupling head 8, and member 6. The last step includes cutting the strand or cable between the effective section 4 and the coupling head 8.

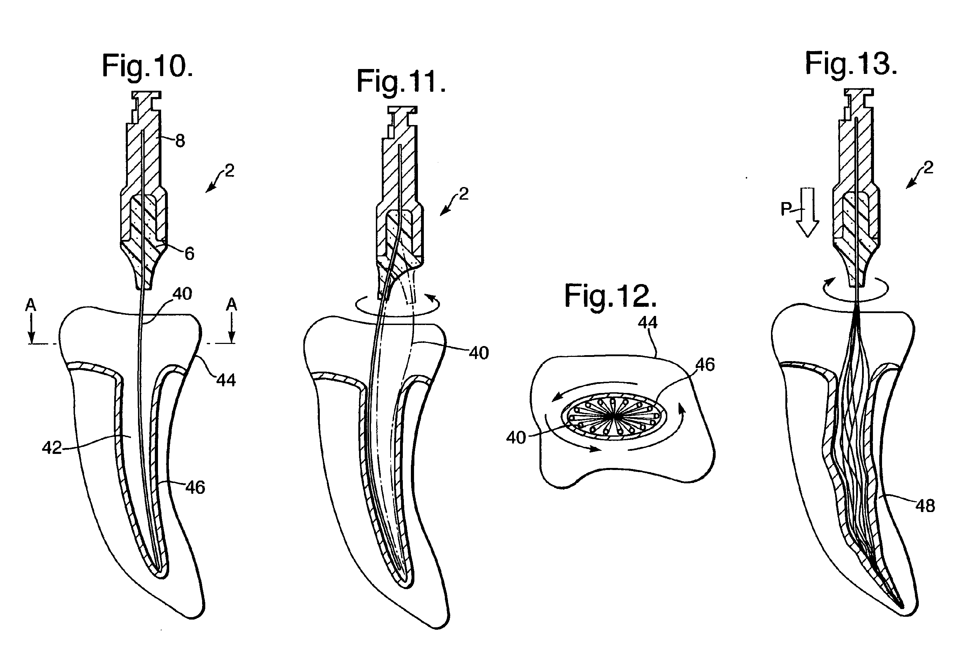

In operation and with reference first to Figs. 10 to 14, when a multi-strand twisted portion is used, it will act differently when rotated in a sense further tightening the twist, or in the opposite sense releasing the twist and spreading out the individual strands.

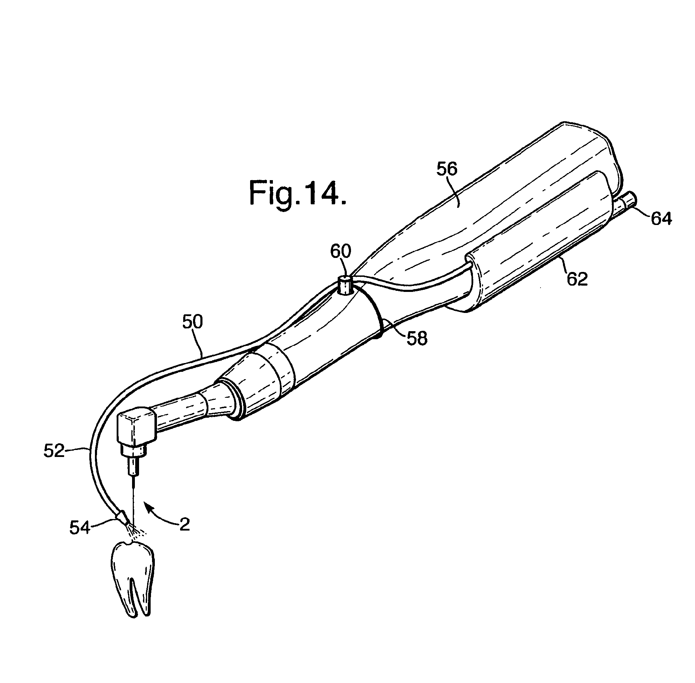

Seen in Fig. 10 is a portion 40 of a strand inserted into a root canal 42 of a tooth 44 showing the internal dentine layer 46. During a first step, the strand section of the endodontic device is inserted into the root canal 42 to the apex, preferably measured by an electronic apex locator. During a second step (Fig. 11), the strands are mechanically rotated by a handpiece (shown in Fig. 14) to moderate or high speed. The thin, flexible portion 40 of the device is not able to hold the radial centrifugal forces developed; therefore it contacts the canal wall following the natural curvature and complex cross-section of the root canal in exact manner. As also seen in Fig. 12, which is the cross-section A-A of Fig. 10, the thin portion 40 of the device 2 mainly follows an oval canal cross-section. The locations of the thin portion of the device 2 are shown as if a series of high speed camera shots are captured on the same film. During an optionally third step (Fig. 13), the portion 40 is rotated in an opposite sense to that of the second step, while slight pressure can be applied in the direction of arrow P. During this special mode of operation, each of the free strands will better follow even a small local widening or indent of the root canal such as the area referenced 48.

Similarly, using a device according to the embodiment of Figs. 8 and 9A, when the device 2 is rotated in the same sense of the winding of the spring portions 36, 38, the diameter of the spring tends to decrease and adapt itself to the diameter of the root canal 42. When, however, the device 2 is rotated in a sense opposite to the winding of the spring, the diameter of the latter tends to increase and during operation, tends to cling to the wall of the root canal 42 and perform a more prominent abrasive action.

During endodontic treatment it is usually required to intermittingly or constantly irrigate the root canal. The irrigation becomes even more important when using high-speed operation. The present invention also proposes a complement irrigation system to be used in conjunction with the endodontic device disclosed above.

The irrigation system illustrated in Figs. 14 to 16 is composed of a flexible pipe 50, stiffened at its end portion with a metal stiffener 52, and equipped with a nozzle 54. The pipe 50 is attached to a standard hand piece 56, e.g., with suitable an elastic or plastic strip 58. A valve 60 is fitted over the flexible pipe 50 normally blocking the pipe by clamping jaws. When required, the dentist can admit small a amount of irrigant during the endodontic treatment. The nozzle 54 is adjusted to spray the irrigation fluid on the active portion of the device 2, on demand.

The invention further proposes three options of delivering the irrigation fluid to the pipe 50 and nozzle 54. Referring to Fig. 14, a small U-shaped reservoir 62 attached to the hand piece 56, suitable to withstand certain pressure, is partially filled with irrigant and pressurized with air through a one-way needle valve 64. The reservoir outlet is connected to the flexible pipe 50.

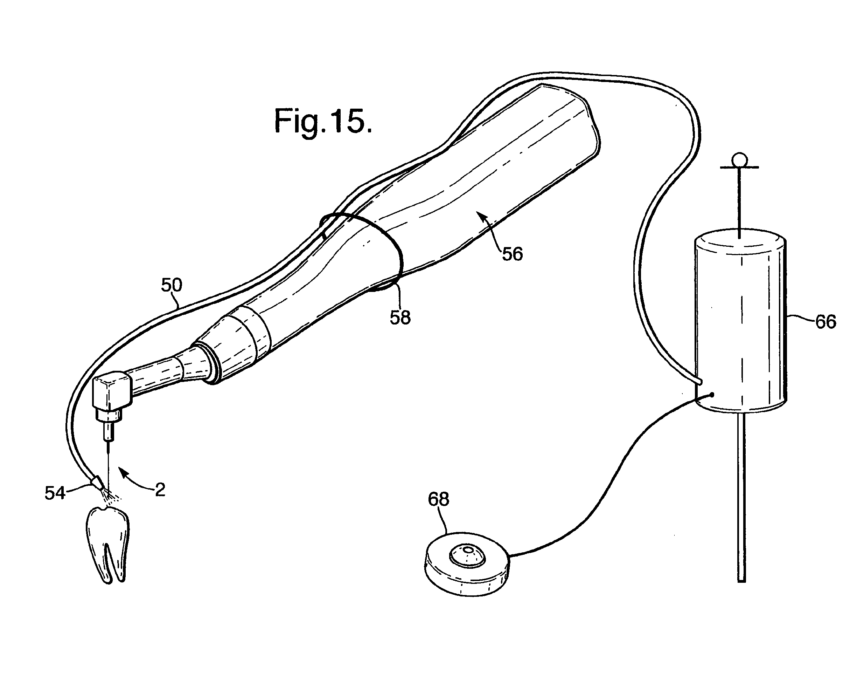

With reference to Fig. 15, a second option is shown, with a bigger pressurized reservoir 66 hung or fixed to a stand-alone base. A foot-operated valve 68 is used to release irrigant from the pressurized reservoir 66 through a long flexible pipe connected to the handpiece.

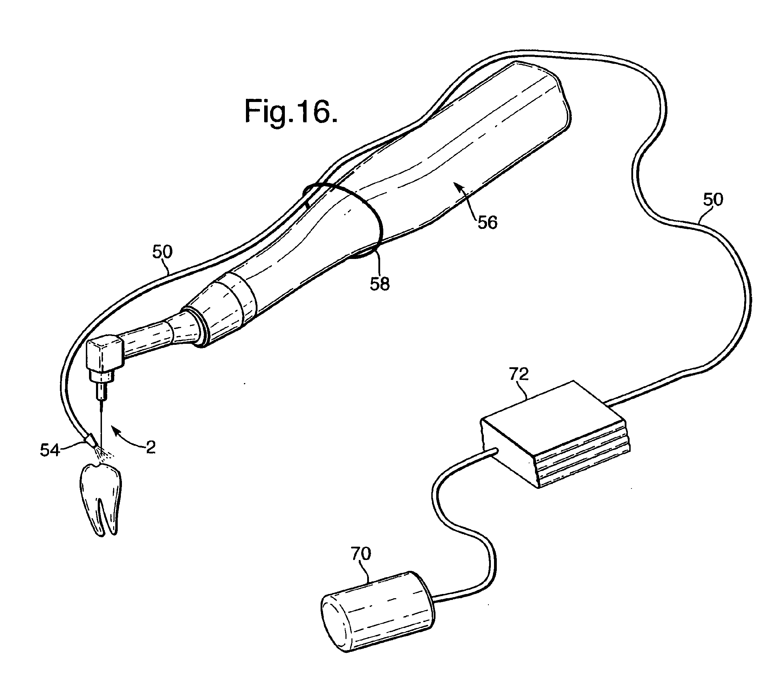

Referring to Fig. 16, a third option is suggested where the outlet of an optionally distant, vented, reservoir 70 is connected to an electric pump 72, operated by a manual or foot switch (not shown). The pump outlet is connected to the hand piece 56 with a long flexible pipe 50.

It will be evident to those skilled in the art that the invention is not limited to the details of the foregoing illustrated embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. An endodontic device for cleaning, filing or reaming root canals, comprising:
at least one metallic, flexible strand having an edge, an effective section and a connecting section and a coupling head connected thereto,
said strand being coated along its effective section with a thin layer of a binder having abrasive particles embedded therein.

2. The device as claimed in claim 1, wherein the said at least one strand is composed of a multi strand twisted cable.

3. The device as claimed in claim 1, wherein said strand has a circular cross-section.

4. The device as claimed in claim 1, wherein said strand has a multi-sided cross-section.

5. The device as claimed in claim 1, wherein a vibration absorbing and stress relieving elastomer coupling member is connected to the coupling head covering at least part of the said connecting section.

6. The device as claimed in claim 1, wherein a vibration absorbing and stress reliving conical spiral spring, attached to the coupling head at one end, grips the connecting section at the smaller end.

7. The device as claimed in claim 1, further comprising a spring wrapped around a section of said strand between said exposed portion and said effective portion.

8. The device as claimed in claim 1, further comprising a spring section constituting an integral part of said strand located between said exposed portion and said effective portion.

9. The device as claimed in claim 7 or claim 8, wherein said spring is coated with an abrasive layer.

10. The device as claimed in claim 1, wherein the effective section closer to the coupling head is coated with coarser abrasive particles.

11. The device as claimed in claim 1, wherein the coupling head material is metal or plastic.

12. The device as claimed in claim 11, wherein a metal coupling head is firmly affixed to the connecting section by bonding, soldering, brazing or crimping.

13. The device as claimed in claim 11, wherein a plastic coupling head is over molded on the said connecting section by injection process.

14. The device as claimed in claim 5, wherein a thermoplastic elastomer coupling member is over molded on the connecting section by injection process after molding of said coupling head.

15. The device as claimed in claim 1, wherein the abrasive particles are selected from the group including aluminum oxide, silicon carbide, zirconia or diamond powder.

16. The device as claimed in claim 1, wherein said connecting section is attached to one end of said coupling head with an exposed, non-coated portion between said effective section and said coupling head.

17. A method for cleaning, filing or reaming root canals, comprising:
providing an endodontic device, as claimed in claim 1;
inserting said effective section into the root canal;
rotating said device at a selected speed, advantageously using the radial centrifugal forces acting on the thin flexible effective section of the device, to follow the natural curvature and complex cross-section of the root canal.

18. A method as claimed in claim 17, further comprising rotating the device as claimed in claim 2, in a sense further tightening the twist of cable for initial shaping of the root canal.

19. A method as claimed in claim 17, further comprising rotating the device as claimed in claim 2, in a sense releasing the twist of cable while slightly pressing down to disperses the individual strands, for finer shaping and polishing of the root canal.

20. A method for manufacturing an endodontic device, comprising:
providing at least one metallic, flexible strand;
covering intermittent portions of said strand with a binder blocking layer;
coating exposed sections of said strand with a layer of a binder having abrasive particles embedded therein to form an effective section;
dissolving the blocking layer;
molding a coupling head and coupling member onto said dissolved portions, and
cutting said strand between the effective sections and said coupling head.

21. The method as claimed in claim 20, further comprising leaving a non-coated portion between said effective section and said coupling head.

22. A complement irrigation system to be used in conjunction with the device as claimed in claim 1, wherein said device is attached to a handpiece, including a flexible pipe equipped with a nozzle adjusted to spray the irrigation fluid on the effective section of the device during use.

23. The irrigation system as claimed in claim 22 further comprising a reservoir surrounding the handpiece, partially filled with irrigant and further pressurized with air and connected to said flexible pipe through a valve.

24. The irrigation system as claimed in claim 22 further comprising a pressurized reservoir fixed to a stand-alone base, connected to the handpiece through a foot-operated valve, and a flexible pipe.

25. The irrigation system as claimed in claim 22, further comprising a distant, vented, reservoir connected to the handpiece through an electric pump operated by a manual or foot switch and a flexible pipe.
